# EUROPÄISCHE PATENTSCHRIFT

(11) **EP 1 114 220 B1**
(45) Veröffentlichungstag und Bekanntmachung des Hinweises auf die Patenterteilung: **14.04.2004**
(21) Anmeldenummer: 99934713.1
(22) Anmeldetag: 20.07.1999
(51) Int. Cl.: D21H 21/12, D21C 3/28, B01D 19/04

(54) **ENTSCHÄUMER UND/ODER ENTLÜFTER AUF DER BASIS VON ÖL-IN-WASSER-DISPERSIONEN**
DEFOAMER AND/OR DEAERATOR BASED ON OIL-IN-WATER DISPERSIONS
AGENTS ANTIMOUSSANTS ET/OU DESAERATEURS A BASE DE DISPERSIONS HUILE DANS EAU

(30) Priorität: 08.08.1998 DE 19835968
(43) Veröffentlichungstag der Anmeldung: 11.07.2001
(73) Patentinhaber: BASF AKTIENGESELLSCHAFT, 67056 Ludwigshafen (DE)
(72) Erfinder: DYLLICK-BRENZINGER, Rainer, D-69469 Weinheim (DE); GLAS, Günther, D-67149 Meckenheim (DE); LORENCAK, Primoz, D-67069 Ludwigshafen (DE); HEGER, Robert, D-69124 Heidelberg (DE); OETTER, Günter, D-67227 Frankenthal (DE)
(86) Internationale Anmeldenummer: PCT/EP1999/005168
(87) Internationale Veröffentlichungsnummer: WO 2000/008254

(56) Entgegenhaltungen:
- EP-A- 0 149 812
- EP-A- 0 597 320
- EP-A- 0 732 134
- DE-A- 3 224 528
- PATENT ABSTRACTS OF JAPAN vol. 013, no. 556 (C-664), 11. Dezember 1989 (1989-12-11) & JP 01 229897 A (HARIMA CHEM INC), 13. September 1989 (1989-09-13)

## Beschreibung

Die Erfindung betrifft Entschäumer und/oder Entlüfter auf der Basis von Öl-in-Wasser-Dispersionen, die in der hydrophoben Öl-Phase mindestens eine als Entschäumer und/oder Entlüfter wirksame Verbindung und gegebenenfalls weitere Bestandteile enthalten.

Aus der EP-A-0 149 812 sind Entschäumer auf der Basis von Öl-in-Wasser-Emulsionen bekannt, die 0,05 bis 5 Gew.-% eines hochmolekularen, wasserlöslichen Homo- oder Copolymerisates von Acrylsäure, Methacrylsäure, Acrylamid oder Methacrylamid als Stabilisator enthalten. Die Ölphase der Emulsionen enthält beispielsweise als entschäumend wirkende Verbindungen einen C₁₂- C₂₆-Alkohol, Destillationsrückstände, die bei der Herstellung von Alkoholen mit einer höheren Kohlenstoffzahl durch Oxosynthese oder nach dem Ziegler-Verfahren erhalten werden und die gegebenenfalls noch alkoxyliert sind. Weitere entschäumend wirkende Substanzen sind beispielsweise Fettsäureester von C₁₂-C₂₂-Carbonsäuren mit einem 1- bis 3-wertigen C₁- bis C₁₈-Alkohol und/oder Kohlenwasserstoffe mit einem Siedepunkt oberhalb von 200°C oder Fettsäuren mit 12 bis 22 C-Atomen. Der mittlere Teilchendurchmesser der Ölphase der Öl-in-Wasser-Emulsionen beträgt 0,5 bis 15 µm.

Aus der DE-A-30 01 387 sind wäßrige emulgatorhaltige Öl-in-Wasser-Emulsionen bekannt, die höherschmelzende aliphatische Alkohole und bei Raumtemperatur flüssige Kohlenwasserstoffe enthalten. Die Ölphase der Öl-in-Wasser-Emulsionen kann gegebenenfalls noch weitere als Entschäumer wirkende Komponenten enthalten, z.B. höherschmelzende nichtaromatische Kohlenwasserstoffe, Fettsäuren oder deren Derivate, wie beispielsweise Fettsäureester, Bienenwachs, Karnaubawachs, Japanwachs und Montanwachs.

Aus der EP-A-0 531 713 sind Entschäumer auf der Basis von Öl-in-Wasser-Emulsionen bekannt, deren Öl-Phase einen Alkohol mit mindestens 12 C-Atomen, Fettsäureester aus Alkoholen mit mindestens 22 C-Atomen und C₁- bis C₃₆-Carbonsäuren, oder Fettsäureester von C₁₂- bis C₂₂-Carbonsäuren mit 1- bis 3-wertigen C₁- bis C₁₈-Alkoholen oder einen Kohlenwasserstoff mit einem Siedepunkt oberhalb von 200°C bzw. Fettsäuren mit 12 bis 22 C-Atomen in Kombination mit Polyglycerinestern enthält, die durch eine mindestens 20 %ige Veresterung von Polyglycerinmischungen mit mindestens einer Fettsäure mit 12 bis 36 C-Atomen erhältlich sind. Auch diese Öl-in-Wasser-Emulsionen sind mit Hilfe eines wasserlöslichen Emulgators stabilisiert.

Aus der EP-A-0 662 172 sind Entschäumer auf der Basis von Wasserin-Öl-Emulsionen bekannt, die beispielsweise in Papierfabriken als Entschäumer eingesetzt werden und die auch bei höheren Temperaturen der Wasserkreisläufe noch ausreichend wirksam sind. Solche Entschäumer enthalten in der Ölphase
(a) Fettsäureester aus C₁₂- bis C₂₂-Carbonsäuren mit 1- bis 3-wertigen C₁- bis C₂₂-Alkoholen,
(b) Polyglycerinester, die durch mindestens 20 %ige Veresterung von Polyglycerinen, die mindestens 2 Glycerineinheiten aufweisen, mit mindestens einer C₁₂- bis C₃₆-Fettsäure erhältlich sind und
(c) Fettsäureester aus C₁₂- bis C₂₂-Carbonsäuren und Polyalkylenglykolen, wobei die Molmasse der Polyalkylenglykole bis zu 5000 g/mol beträgt. Die hydrophobe Phase kann gegebenenfalls weitere Bestandteile wie Alkohole mit mindestens 12 C-Atomen oder Kohlenwasserstoffe mit einem Siedepunkt oberhalb von 200°C enthalten. Diese Öl-in-Wasser-Emulsionen sind ebenfalls mit Hilfe eines Emulgators stabilisiert.

Aus der EP-A-0 696 224 sind wäßrige Antischaummitteldispersionen bekannt, deren dispergierte Phase Fettalkohole mit Schmelzpunkten über 40°C und Ketone mit Schmelzpunkten über 45°C sowie gegebenenfalls natürliche oder synthetische Wachse mit Schmelzpunkten über 50°C enthält.

Aus der EP-A-0 732 134 sind Entschäumer und/oder Entlüfter auf Basis von Öl-in-Wasser-Emulsionen für wäßrige, zur Schaumbildung neigende Medien bekannt, wobei die Öl-Phase der Emulsionen
(a) mindestens einen Alkohol mit mindestens 12 C-Atomen, Destillationsrückstände, die bei der Herstellung von Alkoholen mit einer höheren Kohlenstoffzahl durch Oxosynthese oder nach dem Ziegler-Verfahren erhältlich sind, oder Mischungen der genannten Verbindungen und
(b) mindestens einen Ester aus einem Zuckeralkohol mit mindestens 4 OH-Gruppen oder mindestens 2 OH-Gruppen und mindestens einer intramolekularen Etherbindung und einer Fettsäure mindestens 20 C-Atomen im Molverhältnis 1 zu mindestens 1 enthält, wobei die freien OH-Gruppen dieser Ester gegebenenfalls mit C₁₂- bis C₁₈-Carbonsäuren ganz oder teilweise verestert sind.

Die hydrophobe Phase kann gegebenenfalls weitere entschäumend wirkende Verbindungen wie Fettsäureester aus Alkoholen mit mindestens 22 C-Atomen und C₁- bis C₃₆-Carbonsäure, Polyethylenwachse, natürliche Wachse, Kohlenwasserstoffe mit einem Siedepunkt oberhalb von 200°C oder Fettsäure mit 12 bis 22 C-Atomen enthalten.

Um die Öl-in-Wasser-Emulsionen zu stabilisieren, benötigt man 0,1 bis 5 Gew.-% eines Emulgators. Die bekannten Öl-in-Wasser-Emulsionen haben den Nachteil, daß sie sich bei längerer Lagerung in eine Fett- und eine Wasserphase trennen. Einige der bekannten Öl-in-Wasser-Emulsionen werden dabei sogar fest und sind dadurch für die vorgesehene Anwendung unbrauchbar.

Aus der JP-A-01-229 897 ist eine Leimungsmittelzusammensetzung auf Basis von verstärktem Harzleim bekannt. Gemäß der DE-A-3 224 528 werden bestimmte Polysiloxane als schaumverhütender Zusatz in anionischen synthetischen Oberflächenleimungsmitteln für Papier verwendet.

Aus der EP-A-0 597 320 ist eine Entschäumeremulsion vom Typ Ölin-Wasser bekannt, die als emulsionsstabilisierendes Schutzkolloid ein spezielles wasserlösliches oder wasserdispergierbares lineares Polyurethan enthält.

Der vorliegenden Erfindung liegt die Aufgabe zugrunde, Entschäumer und/oder Entlüfter auf der Basis von Öl-in-Wasser-Emulsionen zur Verfügung zu stellen, wobei die Emulsionen frei von verdikkend wirkenden hochmolekularen Polymerisaten sind und eine ausreichende Lagerstabilität aufweisen.

Die Aufgabe wird erfindungsgemäß gelöst mit Entschäumern und/oder Entlüftern auf der Basis von Öl-in-Wasser-Emulsionen, die in der hydrophoben Öl-Phase mindestens eine als Entschäumer und/oder Entlüfter wirksame Verbindung enthält, wenn die Öl-in-Wasser-Emulsionen 0,01 bis 3 Gew.-% eines Säuregruppen aufweisenden, wasserlöslichen, amphiphilen Copolymerisats einer Molmasse von 1000 bis 100 000 aus (a) hydrophoben monoethylenisch ungesättigten Monomeren und (b) monoethylenisch ungesättigten Carbonsäuren, monoethylenisch ungesättigten Sulfonsäuren, monoethylenisch ungesättigten Phosphonsäuren oder deren Mischungen oder eines wasserlöslichen Salzes davon als Stabilisator enthalten.

Als Entschäumer und/oder Entlüfter wirkende Verbindungen sind beispielsweise natürlich vorkommende oder synthetisch hergestellte Alkohole mit mindestens 12 C-Atomen im Molekül. Beispiele für solche Alkohole sind Myristylalkohol, Cetylalkohol, Stearylalkohol, Palmitylalkohol, Talgfettalkohol und Behenylalkohol, sowie synthetisch hergestellte Alkohole, die beispielsweise nach dem Ziegler-Verfahren durch Oxidation von Aluminiumalkylen erhältliche gesättigte, geradkettige, unverzweigte Alkohole. Synthetische Alkohole werden auch durch Oxosynthese erhalten. Hierbei handelt es sich in der Regel um Alkoholgemische. Die Alkohole können beispielsweise bis zu 48 C-Atome im Molekül enthalten. Sehr wirksame Entschäumer enthalten beispielsweise Mischungen aus mindestens einem C₁₂- bis C₂₆-Alkohol und mindestens einem Fettalkohol mit 28 bis 48 C-Atomen im Molekül, vgl. EP-A-0 322 830. Anstelle der reinen Alkohole können als entschäumend wirkende Verbindungen auch Destillationsrückstände eingesetzt werden, die bei der Herstellung von Alkoholen mit einer höheren Kohlenstoffzahl durch Oxosynthese oder nach dem Ziegler-Verfahren erhältlich sind. Weitere Verbindungen, die als Entschäumer und/oder Entlüfter in Betracht kommen, sind alkoxylierte Alkohole sowie alkoxylierte Destillationsrückstände, die bei der Herstellung von Alkoholen durch Oxosynthese oder nach dem Ziegler-Verfahren anfallen. Die alkoxylierten Verbindungen sind dadurch erhältlich, daß man die langkettigen Alkohole bzw. Destillationsrückstände mit Ethylenoxid oder mit Propylenoxid oder auch mit einer Mischung aus Ethylenoxid und Propylenoxid umsetzt. Hierbei kann man zunächst Ethylenoxid und anschließend Propylenoxid an die Alkohole oder die Destillationsrückstände anlagern oder man addiert zunächst Propylenoxid und danach Ethylenoxid. Pro OH-Gruppe des Alkohols lagert man meistens bis zu 5 mol Ethylenoxid bzw. Propylenoxid an. Besonders bevorzugt aus der Gruppe der alkoxylierten Verbindungen sind solche Reaktionsprodukte, die durch Addition von 1 oder 2 mol Ethylenoxid an 1 mol Fettalkohol bzw. Destillationsrückstand hergestellt werden.

Die obengenannten Fettalkohole mit mindestens 12 C-Atomen im Molekül werden meistens zusammen mit anderen ebenfalls als Entschäumer wirkenden Verbindungen eingesetzt. Solche Verbindungen sind beispielsweise Fettsäureester von C₁₂- bis C₂₂-Carbonsäuren mit 1- bis 3-wertigen C₁-C₁₈-Alkoholen. Die Fettsäuren, die diesen Estern zugrundeliegen, sind beispielsweise Laurinsäure, Myristinsäure, Palmitinsäure, Stearinsäure, Arachinsäure und Behensäure. Vorzugsweise verwendet man Palmitinsäure oder Stearinsäure. Man kann einwertige C₁- bis C₁₈-Alkohole zur Veresterung der genannten Carbonsäuren verwenden, z.B. Methanol, Ethanol, Propanol, Butanol, Hexanol, Dodecanol und Stearylalkohol oder auch zweiwertige Alkohole einsetzen wie Ethylenglykol oder 3-wertige Alkohole, z.B. Glycerin. Die mehrwertigen Alkohole können vollständig oder auch nur teilweise verestert sein.

Weitere entschäumend und entlüftend wirkende Verbindungen sind Polyglycerinester. Solche Ester werden beispielsweise dadurch hergestellt, daß man Polyglycerine, die mindestens 2 Glycerineinheiten enthalten, mit mindestens einer C₁₂- bis C₃₆-Carbonsäure verestert. Die den Estern zugrundeliegenden Polyglycerine werden soweit verestert, daß Verbindungen entstehen, die in Wasser praktisch nicht mehr löslich sind. Die Polyglycerine erhält man beispielsweise durch alkalisch katalysierte Kondensation von Glycerin bei höheren Temperaturen oder durch Umsetzung von Epichlorhydrin mit Glycerin in Gegenwart von sauren Katalysatoren. Die Polyglycerine enthalten üblicherweise mindestens 2 bis etwa 30, vorzugsweise 2 bis 12 Glycerin-Einheiten. Handelsübliche Polyglycerine enthalten Mischungen aus polymeren Glycerinen, z.B. Mischungen aus Diglycerin, Triglycerin, Tetraglycerin, Pentaglycerin und Hexaglycerin und gegebenenfalls höher kondensierten Polyglycerinen. Der Veresterungsgrad der OH-Gruppen der Polyglycerine beträgt mindestens 20 bis 100, vorzugsweise 60 bis 100 %. Die zur Veresterung verwendeten langkettigen Fettsäuren können gesättigt oder auch ethylenisch ungesättigt sein. Geeignete Fettsäuren sind beispielsweise Laurinsäure, Myristinsäure, Palmitinsäure, Stearinsäure, Arachinsäure, Behensäure, Ölsäure, Hexadecensäuren, Elaidinsäure, Eicocensäuren, Dococensäuren wie Erucasäure oder sowie mehrfach ungesättigte Säuren wie Octadecendiensäuren und Octatriensäuren, z.B. Linolsäure und Linolensäure sowie Mischungen der genannten Carbonsäuren. Als Entschäumer geeignete Ester von Polyglycerinen sind beispielsweise in der EP-A-0 662 772 beschrieben.

Andere als Entschäumer- und/oder Entlüfter für wäßrige, zur Schaumbildung neigende Medien geeignete Verbindungen, die entweder allein oder zusammen mit mindestens einem Alkohol mit mindestens 12 C-Atomen eingesetzt werden, sind Ester aus einem Zuckeralkohol mit mindestens 4 OH-Gruppen oder mindestens 2 OH-Gruppen und mindestens einer intramolekularen Etherbindung und einer Fettsäure mit mindestens 20 C-Atomen im Molekül im Molverhältnis 1 zu mindestens 1, wobei die freien OH-Gruppen dieser Ester gegebenenfalls mit C₁₂- bis C₁₈-Carbonsäuren teilweise oder ganz verestert sind. Vorzugsweise verwendet man Ester aus Tetriten, Pentiten und/oder Hexiten mit mindestens 22 C-Atome aufweisenden Fettsäuren im Molverhältnis 1 zu mindestens 1,9. Besonders bevorzugt werden Ester aus Mannit und/oder Sorbit mit Behensäure im Molverhältnis von 1 zu mindestens 1, vorzugsweise 1 zu mindestens 1,9 eingesetzt. Außer den in Betracht kommenden Zuckeralkoholen Sorbit und Mannit eignen sich Adonit, Arabit, Xylit, Dulcit, Pentaerythrit, Sorbitan und Erythrit. Unter Zuckeralkoholen werden die aus Monosacchariden durch Reduktion der Carbonylfunktion entstehenden Polyhydroxyverbindungen verstanden, die selbst keine Zucker sind. Man kann auch die Anhydro-Verbindungen einsetzen, die aus Zuckeralkoholen durch intramolekulare Wasserabspaltung entstehen. Besonders wirksame Entschäumer und/oder Entlüfter erhält man wenn Zuckeralkohole mit C₂₂- bis C₃₀-Fettsäuren verestert werden. Sofern man die mit Zuckeralkoholen nur teilweise mit einer mindestens 20 C-Atome enthaltenden Fettsäure verestert, kann man die nicht veresterten OH-Gruppen des Zuckeralkohols mit einer anderen Carbonsäure verestern, z.B. eine C₁₂bis C₁₈-Carbonsäure einsetzen. Ester dieser Art werden in der EP A-0 732 134 beschrieben.

Weitere als Entschäumer und/oder Entlüfter geeignete Verbindungen sind Ketone mit Schmelzpunkten oberhalb von 45°C. Sie werden meistens zusammen mit Fettalkoholen eingesetzt, deren Schmelzpunkte bei Temperaturen oberhalb von 40°C liegen. Solche Entschäumermischungen sind aus der zum Stand der Technik genannten EP A-0 696 224 bekannt.

Andere Verbindungen, die die Wirksamkeit von langkettigen Alkoholen als Entschäumer verstärken und daher auch in Entschäumermischungen eingesetzt werden, sind beispielsweise Polyethylenwachse mit einer Molmasse von mindestens 2000 sowie natürliche Wachse wie Bienenwachs oder Carnaubawachs.

Ein weiterer Bestandteil von Entschäumermischungen sind Kohlenwasserstoffe mit einem Siedepunkt oberhalb von 200°C (bestimmt bei Normaldruck). Bevorzugt eingesetzte Kohlenwasserstoffe sind Paraffinöle, z.B. die im Handel üblichen Paraffingemische, die auch als Weißöl bezeichnet werden. Außerdem kommen Paraffine in Betracht, deren Schmelzpunkt beispielsweise oberhalb von 50°C liegt.

Die oben genannten als Entschäumer und/oder Entlüfter wirksamen Verbindungen werden entweder allein oder in Mischung untereinander zur Herstellung von Entschäumer- und Entlüfterdispersionen eingesetzt. Sie können in jedem beliebigen Verhältnis miteinander gemischt werden. Das Mischen der Verbindungen und auch das Einemulgieren in Wasser erfolgt bei höheren Temperaturen. Die wirksamen Komponenten, die die Ölphase der Entschäumermischung bilden, werden beispielsweise auf Temperaturen oberhalb von 40°C, z.B. 70 bis 120°C erhitzt und unter Einwirkung von Scherkräften in Wasser emulgiert, so daß man Öl-in-Wasser-Emulsionen erhält. Hierfür verwendet man handelsübliche Vorrichtungen. Die Teilchengröße der dispergierten hydrophoben Phase beträgt beispielsweise 0,5 bis 15, vorzugsweise 0,4 bis 5 µm. Die so erhaltenen feinteiligen Öl-in-Wasser-Emulsionen werden mit Säuregruppen aufweisenden, wasserlöslichen, amphiphilen Copolymerisaten oder deren wasserlöslichen Salzen stabilisiert. Hierbei kann man beispielsweise so vorgehen, daß man zu der Öl-in-Wasser-Emulsion direkt nach dem Homogenisieren 0,01 bis 3 Gew.-%, bezogen auf die gesamte Emulsion, eines Säuregruppen aufweisenden, wasserlöslichen amphiphilen Copolymerisats oder eines wasserlöslichen Salzes davon zusetzt oder, daß man die als Entschäumer und/oder Entlüfter wirkenden Verbindungen in einer wäßrigen Lösung eines Säuregruppen aufweisenden, wasserlöslichen, amphiphilen Copolymerisats oder eines Salzes davon emulgiert. Man erhält auf diese Weise nach dem Abkühlen auf Raumtemperatur lagerstabile Dispersionen. Die in Wasser dispergierte organische Phase ist zu beispielsweise 5 bis 50, vorzugsweise 10 bis 35 Gew.-% am Aufbau der Öl-in-Wasser-Dispersionen beteiligt.

Nach dem Abkühlen auf Raumtemperatur wird die in Wasser emulgierte Ölphase fest, so daß man Dispersionen erhält, die lagerstabil sind.

Besonders vorteilhaft sind Entschäumerdispersionen, die 0,01 bis 3 Gew.-% eines Säuregruppen aufweisenden, wasserlöslichen, amphiphilen Copolymerisats oder eines Salzes davon und zusätzlich 0,01 bis 3 Gew.-% eines üblichen, zur Stablisierung von Öl-in-Wasser-Dispersionen gebräuchlichen grenzflächenaktiven Stoffes enthalten. Geeignete grenzflächenaktive Stoffe sind z.B. anionische, kationische oder nichtionische Verbindungen, die mit den übrigen Stoffen der Entschäumerdispersion verträglich sind. Die als Co-Emulgator eingesetzten oberflächenaktiven Verbindungen können allein oder in Mischung untereinander verwendet werden. So kann man beispielsweise Mischungen aus anionischen und nichtionischen oberflächenaktiven Stoffen zur weiteren Stabilisierung der Entschäumerdispersionen verwenden. Die als Co-Emulgator in Betracht kommenden oberflächenaktiven Verbindungen sind in den zum Stand der Technik angegebenen Literaturstellen als Bestandteil von Entschäumerformulierungen beschrieben. Solche Co-Emulgatoren sind beipielsweise Natrium- oder Ammoniumsalze höherer Fettsäuren, alkoxylierte Alkylphenole, oxethylierte ungesättigte Öle wie Reaktionsprodukte aus einem Mol Ricinusöl und 30 bis 40 Mol Ethylenoxid, sulfierte Ethoxylierungsprodukte von Nonylphenol oder Octylphenol sowie deren Natrium- oder Ammoniumsalze, Alkylarylsulfonate, Sulfonate von Naphthalin und Naphthalinkondensaten, Sulfosuccinate und Anlagerungsprodukte von Ethylenoxid und/oder Propylenoxid an Fettalkohole, mehrwertige Alkohole, Amine oder Carbonsäuren. Besonders wirksame Co-Emulgatoren sind sulfierte Alkyldiphenyloxide, insbesondere bis-sulfierte Alkyldiphenyloxide wie bis-sulfiertes Dodecyldiphenyloxid.

Die Herstellung der bevorzugten Entschäumerdispersionen erfolgt beispielsweise so, daß man zunächst die Komponenten aufschmilzt, die die Ölphase bilden, sie dann in Wasser emulgiert, ein Säuregruppen enthaltendes, wasserlösliches, amphiphiles Copolymerisat oder Salz davon und mindestens einen der oben beschriebenen üblichen Co-Emulgatoren der noch heißen Emulsion, wenn die emulgierten Öltröpfchen noch flüssig sind, zusetzt und die Öl-in-Wasser-Emulsion unter Bildung einer Öl-in-Wasser-Dispersion abkühlt. Die genannten Stabilisatoren können jedoch auch nach dem Abkühlen der Öl-in-Wasser-Emulsion, wenn die Öltröpfchen fest geworden sind, der Entschäumer-Dispersion zugesetzt werden.

Eine Verfahrensvariante zur Herstellung besonders lagerstabiler Entschäumer-Dispersionen besteht darin, daß man die geschmolzene Ölphase in einer wäßrigen Lösung eines Säuregruppen enthaltenden, wasserlöslichen, amphiphilen Copolymerisats emulgiert und mindestens einen Co-Emulgator nach dem Emulgieren zur heißen Öl-in-Wasser-Emulsion oder nach dem Abkühlen auf beispielsweise Raumtemperatur zur Entschäumer-Dispersion zusetzt. Wie sich gezeigt hat, neigen Entschäumer-Dispersionen, die außer dem erfindungsgemäß zu verwendenden Stabilisator noch mindestens einen Co-Emulgator enthalten, noch weniger zum Verdicken bzw. Aufrahmen als diejenigen Entschäumer-Dispersionen, die nur den erfindungsgemäß einzusetzenden Stabilisator enthalten.

Die erfindungsgemäßen Entschäumer und/oder Entlüfter enthalten mindestens ein amphiphiles Copolymerisat aus
(a) hydrophoben monoethylenisch ungesättigten Monomeren und
(b) monoethylenisch ungesättigten Carbonsäuren, monoethylenisch ungesättigten Sulfonsäuren, monoethylenisch ungesättigten Phosphonsäuren oder deren Mischungen.

Geeignete hydrophobe monoethylenisch ungesättigte Monomere
(a) sind beispielsweise Styrol, Methylstyrol, Ethylstyrol, Acrylnitril, Methacrylnitril, C₂- bis C₁₈-Olefine, Ester aus monoethylenisch ungesättigten C₃- bis C₅-Carbonsäuren und einwertigen Alkoholen, Vinylalkylether, Vinylester oder deren Mischungen. Aus dieser Gruppe von Monomeren verwendet man vorzugsweise Isobuten, Diisobuten, Styrol und Acrylsäureester wie Ethylacrylat, Isopropylacrylat, n-Butylacrylat und sec.-Butylacrylat.

Die amphiphilen Copolymerisate enthalten als hydrophile Monomere
(b) vorzugsweise Acrylsäure, Methacrylsäure, Maleinsäure, Maleinsäureanhydrid, Itaconsäure, Vinylsulfonsäure, 2-Acrylamidomethylpropansulfonsäure, Styrolsulfonsäure, Vinylphosphonsäure oder deren Mischungen in einpolymerisierter Form.

Sofern die amphiphilen Copolymerisate in Form der freien Säure nicht ausreichend wasserlöslich sind, werden sie in Form von wasserlöslichen Salzen eingesetzt, z.B. verwendet man die entsprechenden Alkalimetall-, Erdalkalimetall- und Ammoniumsalze. Diese Salze werden beispielsweise durch partielle oder vollständige Neutralisation der freien Säuregruppen der amphiphilen Copolymerisate mit Basen hergestellt, z.B. verwendet man zur Neutralisation Natronlauge, Kalilauge, Magnesiumoxid, Ammoniak oder Amine wie Triethanolamin, Ethanolamin, Morpholin, Triethylamin oder Butylamin. Vorzugsweise werden die Säuregruppen der amphiphilen Copolymerisate mit Ammoniak oder Natronlauge neutralisiert. Die Molmasse der amphiphilen Copolymerisate beträgt beispielsweise 1000 bis 100 000 und liegt vorzugsweise in dem Bereich von 1500 bis 10 000. Die Säurezahlen der amphiphilen Copolymerisate betragen beispielsweise 50 bis 500, vorzugsweise 150 bis 300 mg KOH/g Polymer.

Die erfindungsgemäßen Entschäumer und/oder Entlüfter enthalten 0,01 bis 3, vorzugsweise 0,1 bis 1 Gew.-% eines amphiphilen Copolymerisates oder eines wasserlöslichen Salzes eines solchen Copolymerisates. Besonders bevorzugt sind solche Entschäumer und/oder Entlüfter, die mit amphiphilen Copolymerisaten stabilisiert sind, wobei die Copolymerisate
(a) 95 bis 50 Gew.-% Isobuten, Diisobuten, Styrol oder deren Mischungen und
(b) 5 bis 50 Gew.-% Acrylsäure, Methacrylsäure, Maleinsäure, Halbester von Maleinsäure oder deren Mischungen
einpolymerisiert enthalten. Besonders bevorzugt werden Copolymerisate eingesetzt, die
(a) 65 bis 85 Gew.-% Styrol,
(b) 35 bis 15 Gew. -% Acrylsäure und gegebenenfalls
(c) zusätzlich weitere Monomere
einpolymerisiert enthalten. Die Copolymerisate können gegebenenfalls als weitere Monomere (c) Einheiten von Maleinsäurehalbestern einpolymerisiert enthalten. Solche Copolymerisate sind beispielsweise dadurch erhältlich, daß man Copolymerisate aus Styrol, Diisobuten oder Isobuten oder deren Mischungen mit Maleinsäureanhydrid in Abwesenheit von Wasser copolymerisiert und die Copolymerisate im Anschluß an die Polymerisation mit Alkoholen umsetzt, wobei man pro Mol Anhydridgruppen im Copolymerisat 5 bis 50 Mol-% eines einwertigen Alkohols einsetzt. Geeignete Alkohole sind beispielsweise Methanol, Ethanol, n-Propanol, Isopropanol, n-Butanol, Isobutanol und tert.-Butanol. Man kann jedoch auch die Anhydridgruppen der Copolymerisate mit mehrwertigen Alkoholen wie Glykol oder Glycerin umsetzen. Hierbei wird die Reaktion jedoch nur soweit geführt, daß nur eine OH-Gruppe des mehrwertigen Alkohols mit der Anhydridgruppe reagiert. Sofern die Anhydridgruppen der Copolymerisate nicht vollständig mit Alkoholen umgesetzt werden, erfolgt die Ringöffnung der nicht mit Alkoholen umgesetzten Anhydridgruppen durch Zugabe von Wasser.

Gegenstand der Erfindung ist außerdem die Verwendung von Säuregruppen aufweisenden wasserlöslichen amphiphilen Copolymerisaten einer Molmasse von 1000 bis 100000 aus (a) hydrophoben monoethylenisch ungesättigten Monomeren und (b) monoethylenisch ungesättigten Carbonsäuren, monoethylenisch ungesättigten Sulfonsäuren, monoethylenisch ungesättigten phosphonsäuren oder deren Mischungen oder eines wasserlöslichen Salzes davon als Stabilisator für Entschäumer und/oder Entlüfter auf der Basis von Öl-in-Wasser-Dispersionen. Obwohl die amphiphilen Copolymerisate keine Netzmittel sind, stabilisieren sie die Entschäumer-Dispersionen und gestatten so die Herstellung lagerstabiler Entschäumer und/oder Entlüfter auf Basis von Öl-in-Wasser-Dispersionen.

Die erfindungsgemäßen Entschäumer und/oder Entlüfter sind in wäßrigen Systemen, die zum Schäumen neigen, sowohl bei Raumtemperatur als auch bei höheren Temperaturen, z.B. bei Temperaturen oberhalb von 40°C, sehr wirksam. Sie werden vorzugsweise als Entschäumer und/oder Entlüfter zur Schaumbekämpfung von zur Schaumbildung neigenden wäßrigen Medien beispielsweise in der Nahrungsmittelindustrie, der Stärkeindustrie und in Kläranlagen eingesetzt. Von besonderem Interesse ist jedoch die Verwendung der Entschäumer und/oder Entlüfter zur Schaumbekämpfung bei der Zellstoffkochung, Zellstoffwäsche, der Mahlung von Papierstoff, der Papierherstellung und der Dispergierung von Pigmenten für die Papierherstellung. Bei diesen Prozessen liegt die Temperatur des zu entschäumenden wäßrigen Mediums meistens oberhalb von 40°C, z.B. in dem Temperaturbereich von 45 bis 75°C. Die erfindungsgemäßen Mischungen auf Basis von Öl-in-Wasser-Dispersionen wirken als Entschäumer und als Entlüfter. Sie werden auch mit Vorteil bei der Masse- und Oberflächenleimung von Papier eingesetzt. Beim Einsatz dieser Mischungen in Papierstoffsuspensionen steht beispielsweise ihre entlüftende Wirkung im Vordergrund. Bezogen auf 100 Gew.-Teile Papierstoff in einem schaumstoffbildenden Medium verwendet man beispielsweise bis zu 0,5, vorzugsweise 0,02 bis 0,3 Gew.-% der Entlüfter.

Die in den Beispielen angegebenen Teile sind Gew.-Teile. Die Prozentangaben beziehen sich auf das Gewicht, sofern nicht etwas anderes aus den Angaben in den Beispielen hervorgeht.

Die Aufrahmtendenz der Dispersionen wird mit den sogenannten Zentrifugentest bestimmt. Dazu wird die Dispersion in ein 97 mm langes Zentrifugenglas bis zu einer Höhe von 75 mm gegossen und 30 Min bei 5 000 U/min zentrifugiert. Je größer die unten abgetrennte Menge an Wasser ist, desto geringer die Stabilität der Dispersion. Gemessen wird die Höhe vom Boden des Zentrifugenglases bis zur Fettphasefront.

Die entlüftende Wirkung wird mit Hilfe eines Sonica-Meßgerätes bestimmt, wobei man zu einer 0,38 %igen Papierstoffsuspension bei 40°C genau soviel zugibt, daß sich eine Konzentration von 5 ppm an Entschäumer, bezogen auf die Fettphase (Wirksubstanz) ergibt. Man mißt den Luftgehalt kontinuierlich mittels Ultraschallabschwächung vor der Dosierung der Entschäumer und während der ersten 5 Minuten nach der Dosierung. Der Luftgehalt nimmt zunächst ab und steigt gegen Ende der Messung wieder an. In den Tabellen ist jeweils der minimale Luftgehalt der Papierstoffsuspension in Vol.-% angegeben. Diese Meßmethode ist beschrieben in TAPPI Journal, Vo. 71, 65-69 (1988).

Die genannte Papierstoffsuspension wurde in allen Beispielen und Vergleichsbeispielen verwendet. Sie enthielt vor Zugabe eines Entlüfters 1,44 Vol.-%.Luft. In den Tabellen der Beispiele ist unter der Rubrik entflüftende Wirkung der Gehalt an Luft in Vol.-% nach Dosierung der Entlüfter angegeben. Je kleiner diese Zahl ist, um so wirksamer ist der Entlüfter.

### Beispiel 1

Mit Hilfe eines Ultraturrax und eines Hochdruckhomogenisators der Fa. APV Gaulin GmbH wird eine Öl-in-Wasser-Emulsion hergestellt, bei der die Ölphase zu 27,3 Gew.- % am Aufbau der Dispersion beteiligt ist und eine mittlere Teilchengröße von 0,9 bis 10 µm hat.

Die Ölphase besteht aus folgenden Komponenten:
(a) 552 Teile eines Fettalkoholgemisches von C₁₂- bis C₂₄-Alkoholen,
(b) 48 Teile eines Polyglycerinesters, der erhältlich ist durch Verestern eines Polyglyceringemisches aus 27% Diglycerin, 44% Triglycerin, 19% Tetraglycerin und 10% höher kondensierten Polyglycerinen
(c) 218,4 Teile Glycerintriester von C₁₆- bis C₁₈-Fettsäuren

Die Wasserphase besteht aus:
2 200 Teilen vollentsalztem Wasser,
15 Teilen einer 39 %igen wäßrigen, ammoniakalischen Lösung eines amphiphilen Copolymerisats aus 27,6 Teilen Acrylsäure und 72,4 Teilen Styrol mit einer Säurezahl von 225 und einer Molmasse 5 000 (erhältlich unter der Bezeichnung Joncryl® 680, S.C. Johnson Polymer).

Die Komponenten (a) bis (c) werden zunächst auf eine Temperatur von 90°C erhitzt und dann in die auf 95 °C erhitzte wässrige Phase unter hoher Scherung mit einem Ultraturrax während 2 Minuten emulgiert. Diese Emulsion wird dann bei Drücken zwischen 10 und 60 bar mittels eines Hochdruckhomogenisators emulgiert und sofort nach der Emulgierung mit einem Eisbad auf Raumtemperatur abgekühlt. Die so erhältlichen Dispersionen haben die in Tabelle 1 angegebenen Eigenschaften. Die Viskosität wurde unmittelbar nach der Herstellung der Dispersionen in einem Brookfield-Viskosimeter gemessen.

**Tabelle 1**

| Druck [bar] | Viskosität bei 20°C [mPas] | Entlüftende Wirkung % in Vol-% Luft | Zentrifugen-Test 5 000 U/min in mm | mittlere Teilchengrößenverteilung/Fraunhoferbeugung [µm] | Lagerstabilität +30°C/+5°C 1 Monat |
|---|---|---|---|---|---|
| 10 | 20 | 0,26 | 1,3 | 3,1 | gering zweiphasig |
| 20 | 20 | 0,27 | 0,7 | 1,95 | homogen |
| 40 | 20 | 0,34 | 0,7 | 1,55 | homogen |
| 60 | 20 | 0,38 | 0,7 | 1,3 | homogen |

Alle Dispersionen zeigten nach einer Lagerzeit von 1 Monat keinen nennenswerten viskositätsaufbau.

Durch Zugabe von 15 Teilen einer 45 %igen wässrigen Lösung eines Co-Emulgators auf Basis eines bis-sulfierten Dodecyldiphenyloxids läßt sich die Langzeitstabilität und insbesondere ein Viskositätsaufbau unter Scherbedingungen verhindern.

### Vergleichsbeispiel 1:

Mit Hilfe eines Ultraturrax und eines Hochdruckhomogenisators der Fa. APV wird eine Öl-in-Wasser-Emulsion hergestellt, bei der die Ölphase zu 27,3 Gew.-% am Aufbau der Dispersion beteiligt ist und eine mittlere Teilchengröße von 0,9 bis 10 µm hat.

Die Ölphase besteht aus folgenden Komponenten:
(a) 552 Teilen eines Fettalkoholgemisches von C₁₂- bis C₂₄-Alkoholen,
(b) 48 Teilen eines Polyglycerinesters, der erhältlich ist durch Verestern eines Polyglyceringemisches aus 27% Diglycerin, 44% Triglycerin, 19% Tetraglycerin und 10% höher kondensierten Polyglycerinen und
(c) 218,4 Teilen Glycerintriester von C₁₆- bis C₁₈-Fettsäuren
Die Wasserphase besteht aus:
2 200 Teilen vollentsalztem Wasser,
40 Teilen einer 45 %igen wässrigen Lösung eines bis-sulfierten Dodecyldiphenyloxids sowie 10 Teilen eines Additionsprodukts von 12 mol Ethylenoxid an 1 mol eines C₁₃-Alkohols.

Die Komponenten (a) bis (c) werden zunächst auf eine Temperatur von 90°C erhitzt und dann in eine 95°C heiße wässrige Phase unter hoher Scherung durch einen Ultraturrax während 2 Minuten emulgiert. Diese Emulsion wird dann bei Drücken zwischen 10 und 60 bar mittels eines Hochdruckhomogenisators emulgiert und sofort nach der Emulgierung mit einem Eisbad auf Raumtemperatur abgekühlt. Die so erhältlichen Emulsionen haben die in Tabelle 2 angegebenen Eigenschaften. Die Viskosität wurde unmittelbar nach der Herstellung in einem Brookfield-Viskosimeter gemessen.

**Tabelle 2**

| Druck [bar] | Viskosität bei 20°C [mPas] | Entlüftende Wirkung in Vol-% Luft | Zentrifugen-Test 5 000 U/min in min | Teilchengrößen-Verteilung/ Fraunhoferbeugung [µm] | Lagerstabilität +30°C/+5°C 1 Monat |
|---|---|---|---|---|---|
| 10 | 200 | 0,27 | 15 | 4,1 | rahmt auf |
| 20 | 500 | 0,28 | 14 | 2,6 | rahmt auf |
| 40 | Paste | | | 5,3** | |
| 60 | Paste | | | 10,3 ** | |

| | | | | | |
|---|---|---|---|---|---|
| ** Die Teilchengrößenverteilungen wurden mit Fraunhoferbeugung gemessen und sind bimodal mit Gausskurven bei niedrigen und bei höheren Teilchengrößen. | | | | | |

### Vergleichsbeispiel 2:

Mit Hilfe eines Ultraturrax wird eine Öl-in-Wasser-Emulsion hergestellt, bei der die Ölphase zu 27,3 Gew.-% am Aufbau der Dispersion beteiligt ist und eine mittlere Teilchengröße von 0,9 bis 10 µm hat.

Die Ölphase besteht aus folgenden Komponenten:
(a) 92 Teilen eines Fettalkoholgemisches von C₁₂- bis C₂₄-Alkoholen
(b) 8 Teilen eines Polyglycerinesters, der erhältlich ist durch Verestern eines Polyglyceringemisches aus 27% Diglycerin, 44% Triglycerin, 19% Tetraglycerin und 10% höher kondensierten Polyglycerinen und
(c) 28 Teilen Glycerintriester von C₁₆- bis C₁₈-Fettsäuren
(d) 8,4 Teile Behenylalkohol (C₂₀-C₂₄-Alkohol).

Die Wasserphase besteht aus:
360 Teilen vollentsalztem Wasser,
0,17 Teilen einer 45%igen wässrigen Lösung eines bis-sulfierten Dodecyldiphenyloxids sowie 0,08 Teilen eines Additionsprodukts von 13 mol Ethylenoxid an 1 mol eines C₁₃-Alkohols.

Die Komponenten (a) bis (c) werden zunächst auf eine Temperatur von 90°C erhitzt und dann in eine 95°C warme wässrige Phase unter hoher Scherung durch einen Ultraturrax während 60 Sekunden emulgiert und sofort nach der Emulgierung mit einem Eisbad auf Raumtemperatur abgekühlt. Die so erhältliche Emulsion hat die angegebenen Eigenschaften. Die Viskosität wurde unmittelbar nach der Herstellung gemessen.

**Tabelle 3**

| Viskosität bei 20°C | Entlüftende Wirkung in Vol.-% | Zentrifugentest Füllhöhe 75 mm 5 000 U/min | mittlere Teilchengrößenverteilung/Fraunhoferbeugung [µm] | Lagerstabilität +30°C/+5°C 1 Monat |
|---|---|---|---|---|
| 50 mPas | 0,29 | 15 mm | 4,7 | aufgerahmt |

### Beispiel 2:

Mit Hilfe eines Ultraturrax wird eine Öl-in-Wasser-Emulsion hergestellt, bei der die Ölphase zu 50 Gew.-% am Aufbau der Dispersion beteiligt ist und eine mittlere Teilchengröße von 3,3 µm ha t .

Die Ölphase besteht aus folgenden Komponenten:
(a) 205,6 Teilen eines Fettalkoholgemisches von C₁₂- bis C₂₄-Alkoholen
(b) 8,0 Teilen eines Polyglycerinesters, der erhältlich ist durch Verestern eines Polyglyceringemisches aus 27% Diglycerin, 44% Triglycerin, 19% Tetraglycerin und 10% höher kondensierten Polyglycerinen und
(c) 36,4 Teilen Glycerintriester von C₁₆- bis C₁₈-Fettsäuren

Die Wasserphase besteht aus:
270 Teilen vollentsalztem Wasser,
15,2 Teilen einer 39%igen wässrigen, ammoniakalischen Lösung eines amphiphilen Copolymerisats aus 25 Teilen Acrylsäure und
75 Teilen Styrol (erhältlich unter der Bezeichnung Joncryl® L679, S.C. Johnson Polymer).

Die Komponenten (a) bis (c) werden zunächst auf eine Temperatur von 90°C erhitzt und dann in eine 95°C warme wässrige Phase unter hoher Scherung durch einen Ultraturrax während 60 Sekunden emulgiert und sofort nach der Emulgierung mit einem Eisbad auf Raumtemperatur abgekühlt. Die so erhältliche Emulsion hat die angegebenen Eigenschaften. Die Viskosität wurde unmittelbar nach der Herstellung gemessen.

**Tabelle 4**

| Viskosität bei 20°C | Entlüftende Wirkung in Vol.-% | Zentrifugentest Füllhöhe 75 mm 5 000 U/min | Teilchengrößenverteilung/Fraunhoferbeugung | Lagerstabilität +30°C/+5°C 1 Monat |
|---|---|---|---|---|
| 2000 mPas | 0,3 | 5 mm | 3,3 µm | zähflüssig |

## Patentansprüche

1. Entschäumer und/oder Entlüfter auf der Basis von Öl-in-Wasser-Dispersionen, die in der hydrophoben Öl-Phase mindestens eine als Entschäumer und/oder Entlüfter wirksame Verbindung enthält, **dadurch gekennzeichnet, daß** die Öl-in-Wasser-Dispersionen 0,01 bis 3 Gew.-% eines Säuregruppen aufweisenden, wasserlöslichen, amphiphilen Copolymerisats einer Molmasse von 1000 bis 100 000 aus
(a) hydrophoben monoethylenisch ungesättigten Monomeren und
(b) monoethylenisch ungesättigten Carbonsäuren, monoethylenisch ungesättigten Sulfonsäuren, monoethylenisch ungesättigten Phosphonsäuren oder deren Mischungen
oder eines wasserlöslichen Salzes davon als Stabilisator enthalten.

2. Entschäumer und/oder Entlüfter nach Anspruch 1, **dadurch gekennzeichnet, daß** die amphiphilen Copolymerisate als hydrophobe monoethylenisch ungesättigte Monomere (a) Styrol, Methylstyrol, Ethylstyrol, Acrylnitril, Methacrylnitril, C₂bis C₁₈-Olefine, Ester aus monoethylenisch ungesättigten C₃bis C₅-Carbonsäuren und einwertigen Alkoholen, Vinylalkylethern, Vinylestern oder deren Mischungen einpolymerisiert enthalten.

3. Entschäumer und/oder Entlüfter nach Anspruch 1 oder 2, **dadurch gekennzeichnet, daß** die Copolymerisate als hydrophile Monomere (b) Acrylsäure, Methacrylsäure, Maleinsäure, Maleinsäureanhydrid, Itaconsäure, Vinylsulfonsäure, 2-Acrylamidomethylpropansulfonsäure, Styrolsulfonsäure, Vinylphosphonsäure oder deren Mischungen einpolymerisiert enthalten.

4. Entschäumer und/oder Entlüfter nach einem der Ansprüche 1 bis 3, **dadurch gekennzeichnet, daß** die amphiphilen Copolymerisate eine Säurezahl von 50 bis 500 mg KOH/g Polymer haben.

5. Entschäumer und/oder Entlüfter nach einem der Ansprüche 1 bis 4, **dadurch gekennzeichnet, daß** die Molmasse der amphiphilen Copolymerisate 1500 bis 10 000 beträgt.

6. Entschäumer und/oder Entlüfter nach einem der Ansprüche 1 bis 5, **dadurch gekennzeichnet, daß** sie 0,1 bis 1 Gew.-% eines amphiphilen Copolymerisats oder eines wasserlöslichen Salzes eines solchen Copolymerisats enthalten.

7. Entschäumer und/oder Entlüfter nach einem der Ansprüche 1 bis 6, **dadurch gekennzeichnet, daß** die Copolymerisate
(a) 95 bis 50 Gew.-% Isobuten, Diisobuten, Styrol oder deren Mischungen und
(b) 5 bis 50 Gew.-% Acrylsäure, Methacrylsäure, Maleinsäure, Halbester von Maleinsäure oder deren Mischungen
einpolymerisiert enthalten.

8. Entschäumer und/oder Entlüfter nach einem der Ansprüche 1 bis 7, **dadurch gekennzeichnet, daß** die Copolymerisate
(a) 90 bis 50 Gew.-% Styrol und
(b) 10 bis 50 Gew.-% Acrylsäure
einpolymerisiert enthalten.

9. Entschäumer und/oder Entlüfter nach einem der Ansprüche 1 bis 8, **dadurch gekennzeichnet, daß** die Copolymerisate als weitere Monomere Einheiten von Maleinsäurehalbestern einpolymerisiert enthalten.

10. Verwendung von Säuregruppen aufweisenden, wasserlöslichen, amphiphilen Copolymerisaten oder deren wasserlöslichen Salzen nach einem der Vorhergehenden Ans prüchen als Stabilisator für Entschäumer und/oder Entlüfter auf der Basis von Öl-in-Wasser-Dispersionen.

11. Verwendung der Entschäumer und/oder Entlüfter nach den Ansprüchen 1 bis 9 bei der Papierherstellung, der Zellstoffkochung, der Zellstoffwäsche, der Mahlung von Papierstoff und der Dispergierung von Pigmenten für die Papierherstellung zum Entschäumen und/oder Entlüften der wäßrigen Medien.

12. Verwendung der Entschäumer und/oder Entlüfter nach Anspruch 11, **dadurch gekennzeichnet, daß** man sie bei der Masse- und Oberfächenleimung von Papier einsetzt.

13. Verwendung der Entschäumer und/oder Entlüfter nach Anspruch 11, **dadurch gekennzeichnet, daß** man sie bei der Papierherstellung in wäßrigen Systemen verwendet, deren Temperatur oberhalb von 40°C betragen.

## Claims

1. A defoamer and/or deaerator based on an oil-in-water dispersion which contains, in the hydrophobic oil phase, at least one compound effective as a defoamer and/or deaerator, wherein the oil-in-water dispersion contains from 0.01 to 3% by weight of a water-soluble, amphiphilic copolymer having acid groups and having a molar mass of from 1000 to 100,000 of
(a) hydrophobic monoethylenically unsaturated monomers and
(b) monoethylenically unsaturated carboxylic acids, monethylenically unsaturated sulfonic acids, monoethylenically unsaturated phosphonic acids or a mixture thereof
or of a water-soluble salt thereof as a stabilizer.

2. A defoamer and/or deaerator as claimed in claim 1, wherein the amphiphilic copolymers contain, as hydrophobic monoethylenically unsaturated monomers (a), styrene, methylstyrene, ethylstyrene, acrylonitrile, methacrylonitrile, C₂- to C₁₈-olefins, esters of monoethylenically unsaturated C₃- to C₅-carboxylic acids and monohydric alcohols, vinyl alkyl ethers, vinyl esters or a mixture thereof as polymerized units.

3. A defoamer and/or deaerator as claimed in claim 1 or 2, wherein the copolymers contain, as hydrophilic monomers (b), acrylic acid, methacrylic acid, maleic acid, maleic anhydride, itaconic acid, vinylsulfonic acid, 2-acrylamidomethylpropanesulfonic acid, styrenesulfonic acid, vinylphosphonic acid or a mixture thereof as polymerized units.

4. A defoamer and/or deaerator as claimed in any one of claims 1 to 3, wherein the amphiphilic copolymers have an acid number of from 50 to 500 mg of KOH/g of polymer.

5. A defoamer and/or deaerator as claimed in any one of claims 1 to 4, wherein the molar mass of the amphiphilic copolymers is from 1500 to 10,000.

6. A defoamer and/or deaerator as claimed in any one of claims 1 to 5, which contains from 0.1 to 1% by weight of an amphiphilic copolymer or of a water-soluble salt of such a copolymer.

7. A defoamer and/or deaerator as claimed in any one of claims 1 to 6, wherein the copolymers contain
(a) from 95 to 50% by weight of isobutene, diisobutene, styrene or a mixture thereof and
(b) from 5 to 50% by weight of acrylic acid, methacrylic acid, maleic acid, half-esters of maleic acid or a mixture thereof
as polymerized units.

8. A defoamer and/or deaerator as claimed in any one of claims 1 to 7, wherein the copolymers contain
(a) from 90 to 50% by weight of styrene and
(b) from 10 to 50% by weight of acrylic acid
as polymerized units.

9. A defoamer and/or deaerator as claimed in any one of claims 1 to 8, wherein the copolymers contain units of maleic half-esters as polymerized further monomers.

10. The use of acid group containing water-soluble amphiphilic copolymers or water-soluble salts thereof according to any preceding claim as a stabilizer for antifoams and/or deaerators based on oil-in-water dispersions.

11. The use of the antifoams and/or deaerators according to any of claims 1 to 9 in papermaking, pulp cooking, pulp washing, the beating of paper stock and the dispersing of pigments for papermaking to defoam and/or deaerate aqueous media.

12. The use of the antifoams and/or deaerators according to claim 11, **characterized in that** they are used in engine and surface sizing of paper.

13. The use of the defoamers and/or deaerators according to claim 11, **characterized in that** they are used in papermaking in aqueous systems whose temperature is above 40°C.

## Revendications

1. Agents anti-mousse et/ou désaérateurs à base de dispersions huile dans l'eau, qui contiennent au moins un composé actif en tant qu'agent anti-mousse et/ou désaérateur dans la phase huileuse hydrophobe, **caractérisés en ce que** les dispersions huile dans l'eau contiennent 0,01% à 3% en poids d'un copolymère amphiphile hydrosoluble présentant des groupes acide, ayant une masse moléculaire allant de 1000 à 100 000, composé
(a) de monomères hydrophobes à insaturation monoéthylénique et
(b) d'acides carboxyliques à insaturation monoéthylénique, d'acides sulfoniques à insaturation monoéthylénique, d'acides phosphoniques à insaturation monoéthylénique ou de leurs mélanges
ou un sel hydrosoluble de celui-ci en tant que stabilisant.

2. Agents anti-mousse et/ou désaérateurs selon la revendication 1, **caractérisés en ce que** les copolymères amphiphiles contiennent sous forme polymérisée, en tant que monomères hydrophobes à insaturation monoéthylénique (a), du styrène, du méthylstyrène, de l'éthylstyrène, de l'acrylonitrile, du méthacrylonitrile, des oléfines en C₂ à C₁₈, des esters d'acides carboxyliques en C₃ à C₅ à insaturation monoéthylénique et de monoalcools, des éthers vinylalkyliques, des esters de vinyle ou leurs mélanges.

3. Agents anti-mousse et/ou désaérateurs selon la revendication 1 ou 2, **caractérisés en ce que** les copolymères contiennent sous forme polymérisée, en en tant que monomères hydrophiles (b), de l'acide acrylique, de l'acide méthacrylique, de l'acide maléique, de l'anhydride maléique, de l'acide itaconique, de l'acide vinylsulfonique, de l'acide 2-acrylamidométhylpropanesulfonique, de l'acide styrènesulfonique, de l'acide vinylphosphonique ou leurs mélanges.

4. Agents anti-mousse et/ou désaérateurs selon l'une quelconque des revendications 1 à 3, **caractérisés en ce que** les copolymères amphiphiles ont un indice d'acide allant de 50 mg à 500 mg de KOH/g de polymère.

5. Agents anti-mousse et/ou désaérateurs selon l'une quelconque des revendications 1 à 4, **caractérisés en ce que** la masse moléculaire des copolymères amphiphiles va de 1500 à 10 000.

6. Agents anti-mousse et/ou désaérateurs selon l'une quelconque des revendications 1 à 5, **caractérisés en ce qu'**ils contiennent 0,1% à 1% en poids d'un copolymère amphiphile ou d'un sel hydrosoluble d'un tel copolymère.

7. Agents anti-mousse et/ou désaérateurs selon l'une quelconque des revendications 1 à 6, **caractérisés en ce que** les copolymères contiennent sous forme polymérisée
(a) 95% à 50% en poids d'isobutène, de diisobutène, de styrène ou de leurs mélanges et
(b) 5% à 50% en poids d'acide acrylique, d'acide méthacrylique, d'acide maléique, d'hémi-esters d'acide maléique ou de leurs mélanges.

8. Agents anti-mousse et/ou désaérateurs selon l'une quelconque des revendications 1 à 7, **caractérisés en ce que** les copolymères contiennent sous forme polymérisée
(a) 90% à 50% en poids de styrène et
(b) 10 à 50% en poids d'acide acrylique.

9. Agents anti-mousse et/ou désaérateurs selon l'une quelconque des revendications 1 à 8, **caractérisés en ce que** les copolymères contiennent sous forme polymérisée, en tant que monomères supplémentaires, des motifs d'hémi-esters d'acide maléique.

10. Utilisation de copolymères amphiphiles hydrosolubles présentant des groupes acide ou de leurs sels hydrosolubles selon l'une quelconque des revendications précédentes en tant que stabilisant pour des agents anti-mousse et/ou des désaérateurs à base de dispersions huile dans l'eau.

11. Utilisation des agents anti-mousse et/ou des désaérateurs selon les revendications 1 à 9 pour la fabrication de papier, la cuisson de pâte de cellulose, le blanchissage de pâte de cellulose, la trituration de pâte à papier et la dispersion de pigments pour la fabrication de papier afin d'éliminer la mousse et/ou l'air des milieux aqueux.

12. Utilisation des agents anti-mousse et/ou des désaérateurs selon la revendication 11, **caractérisée en ce qu'**on les met en oeuvre pour le collage en pile ou en surface du papier.

13. Utilisation des agents anti-mousse et/ou des désaérateurs selon la revendication 11, **caractérisée en ce qu'**on les utilise pour la fabrication de papier dans des systèmes aqueux dont la température est supérieure à 40°C.
